(19) Europäisches Patentamt
European Patent Office
Office européen des brevets

(11) **EP 3 776 454 B1**

(12) **EUROPÄISCHE PATENTSCHRIFT**

(45) Veröffentlichungstag und Bekanntmachung des Hinweises auf die Patenterteilung:
**15.03.2023 Patentblatt 2023/11**

(21) Anmeldenummer: **19716848.7**

(22) Anmeldetag: **03.04.2019**

(51) Internationale Patentklassifikation (IPC):
***G06T 5/00*** *(2006.01)*

(52) Gemeinsame Patentklassifikation (CPC):
**G06T 5/006**

(86) Internationale Anmeldenummer:
**PCT/EP2019/058348**

(87) Internationale Veröffentlichungsnummer:
**WO 2019/197230 (17.10.2019 Gazette 2019/42)**

(54) **KORREKTURVERFAHREN UND VORRICHTUNG ZUR KORREKTUR VON BILDDATEN**

CORRECTION METHOD, AND DEVICE FOR CORRECTING IMAGE DATA

PROCÉDÉ DE CORRECTION ET DISPOSITIF DE CORRECTION DE DONNÉES D'IMAGES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **10.04.2018 DE 102018205399**

(43) Veröffentlichungstag der Anmeldung:
**17.02.2021 Patentblatt 2021/07**

(73) Patentinhaber: **Continental Automotive Technologies GmbH**
**30165 Hannover (DE)**

(72) Erfinder: **WEINLICH, Andreas**
**81737 München (DE)**

(74) Vertreter: **Continental Corporation**
**c/o Continental Teves AG & Co. OHG**
**Intellectual Property**
**Guerickestraße 7**
**60488 Frankfurt a. Main (DE)**

(56) Entgegenhaltungen:
- WANG QUANZENG ET AL: "Development of the local magnification method for quantitative evaluation of endoscope geometric distortion", JOURNAL OF BIOMEDICAL OPTICS, SPIE, Bd. 21, Nr. 5, 1. Mai 2016 (2016-05-01), Seite 56003, XP060071986, ISSN: 1083-3668, DOI: 10.1117/1.JBO.21.5.056003 [gefunden am 2016-05-09]
- REMY S ET AL: "Estimating the radial distortion of an optical system; effect on a localization process", PROCEEDINGS OF THE INTERNATIONAL CONFERENCE ON IMAGE PROCESSING (ICIP) AUSTIN, NOV. 13 - 16, 1; [PROCEEDINGS OF THE INTERNATIONAL CONFERENCE ON IMAGE PROCESSING (ICIP)], LOS ALAMITOS, IEEE COMP. SOC. PRESS, US, Bd. 2, 13. November 1994 (1994-11-13), Seiten 997-1001, XP010146094, DOI: 10.1109/ICIP.1994.413505 ISBN: 978-0-8186-6952-1
- JUNHEE PARK ET AL: "Lens distortion correction using ideal image coordinates", IEEE TRANSACTIONS ON CONSUMER ELECTRONICS, IEEE SERVICE CENTER, NEW YORK, NY, US, Bd. 55, Nr. 3, 1. August 2009 (2009-08-01) , Seiten 987-991, XP011277853, ISSN: 0098-3063, DOI: 10.1109/TCE.2009.5278053
- QIYUE WANG ET AL: "Radial distortion correction in a vision system", APPLIED OPTICS, Bd. 55, Nr. 31, 28. Oktober 2016 (2016-10-28), Seite 8876, XP055589648, WASHINGTON, DC; US ISSN: 0003-6935, DOI: 10.1364/AO.55.008876
- HUGHES C ET AL: "Wide-angle camera technology for automotive applications: a review", IET INTELLIGENT TRANSPORT SYS,, Bd. 3, Nr. 1, 9. März 2009 (2009-03-09), Seiten 19-31, XP006032372, ISSN: 1751-9578, DOI: 10.1049/IET-ITS:20080017

EP 3 776 454 B1

**Beschreibung**

Es wird ein Korrekturverfahren angegeben. Darüber hinaus wird eine Vorrichtung zur Korrektur von Bilddaten angegeben.

Aus WANG QUANZENG ET AL, "Development of the local magnification method for quantitative evaluation of endoscope geometric distortion", JOURNAL OF BIOMEDICAL OPTICS, SPIE, Bd. 21, Nr. 5, 1. Mai 2016, Seite 56003 ist eine lokale Vergrößerungsmethode zur Bewertung einer Endoskopverzerrung sowie basierend auf der Methode eine Berechnung von Bildhöhenverzerrung und radialer Verzerrung bekannt.

Aus REMY S ET AL, "Estimating the radial distortion of an optical system; effect on a localization process", PROCEEDINGS OF THE INTERNATIONAL CONFERENCE ON IMAGE PROCESSING (ICIP) AUSTIN, NOV. 13 - 16, 1; SOC. PRESS, US, Bd. 2, 13. November 1994, Seiten 997 bis 1001 ist ein Verfahren zur Abschätzung einer radialen Verzerrung, die von Linsen eines optischen Systems erzeugt wird, bekannt.

Eine zu lösende Aufgabe besteht darin, ein Korrekturverfahren zur Korrektur von über eine Optik aufgenommene Bilddaten anzugeben. Eine weitere zu lösende Aufgabe besteht darin, eine Vorrichtung anzugeben, mit der ein solches Korrekturverfahren durchgeführt werden kann.

Diese Aufgaben werden durch das Korrekturverfahren nach Anspruch 1 und die Vorrichtung nach Anspruch 11 gelöst. Vorteilhafte Ausgestaltungen und Weiterbildungen sind Gegenstand der abhängigen Patentansprüche.

Das Korrekturverfahren umfasst einen Schritt A), in dem Bilddaten eingelesen werden. Die Bilddaten sind repräsentativ für ein über eine Optik aufgenommenes Kalibrierbild eines Kalibriermusters.

Das Kalibriermuster umfasst eine Mehrzahl von Strukturen, insbesondere Linien oder Punkte, wie zum Beispiel Gitterlinien oder Gitterpunkte, und das Kalibrierbild umfasst entsprechend abgebildete Strukturen.

Beispielsweise ist das Kalibrierbild in eine Mehrzahl von Pixel unterteilt, wobei die Bilddaten Intensitäten für Farbwerte in den einzelnen Pixeln repräsentieren.

Bei der Optik handelt es sich beispielsweise um eine Linse oder ein Linsensystem, zum Beispiel einer Kamera oder eines Mikroskops oder eines Objektivs.

Die Strukturen des Kalibriermusters heben sich von dem Hintergrund des Kalibriermusters bevorzugt optisch deutlich ab. Beispielsweise ist das Kalibriermuster ein Schwarz-Weiß-Muster. Die Strukturen sind beispielsweise in einem regelmäßigen Muster angeordnet. Die Strukturen des Kalibriermusters sind bevorzugt gerade und/oder zueinander parallel verlaufende Linien. Umfasst das Kalibriermuster Punkte, so sind diese bevorzugt in einem regelmäßigen Gitter angeordnet. Es kann das Kalibriermuster aber auch ein Schachbrettmuster sein.

Als Kalibriermuster kann zum Beispiel jede Szene verwendet werden, bei der Linien und/oder Punkte zu erkennen sind, bevorzugt in einem gleichen Abstand zum Referenzpunkt, wie dem optischen Bildzentrum.

Obwohl Linien des Kalibriermusters zum Beispiel gerade und/oder parallel verlaufen, können die abgebildeten Linien des Kalibrierbildes gekrümmt verlaufen. Dies kann zum Beispiel auf Abbildungsfehler der Optik zurückgeführt werden. Das hier beschriebene Korrekturverfahren ist insbesondere dazu eingerichtet, solche Abbildungsfehler der Optik zu korrigieren.

Das Verfahren umfasst einen Schritt B), in dem eine Gerade durch das Kalibrierbild simuliert wird, so dass die Gerade durch einen Referenzpunkt verläuft, der die Gerade in eine erste Halbgerade und eine zweite Halbgerade unterteilt und die erste Halbgerade und die zweite Halbgerade jeweils die abgebildeten Strukturen in einem oder mehreren Schnittpunkten schneiden. Das heißt, jede Halbgerade durchkreuzt eine oder mehrere der abgebildeten Strukturen.

Die Schnittpunkte können dabei entweder manuell annotiert werden oder vollautomatisch, beispielsweise bei einem Schwarz-Weiß-Kalibriermuster durch ein Gradientendetektionsverfahren. Beispielsweise schneiden die erste Halbgerade und die zweite Halbgerade die abgebildeten Linien jeweils in zumindest zwei oder zumindest vier oder zumindest acht Schnittpunkten.

Das Verfahren umfasst einen Schritt C), in dem eine erste und eine zweite Folge von Messwerten ermittelt wird, wobei die Messwerte die sich aus dem Kalibrierbild ergebenden Abstände der Schnittpunkte auf der ersten Halbgeraden und auf der zweiten Halbgeraden zum Referenzpunkt repräsentieren.

Bei der ersten Folge und der zweiten Folge handelt es sich also jeweils um Zahlenfolgen. Die Folgenelemente in den Zahlenfolgen sind die genannten Messwerte. Die Messwerte repräsentieren bevorzugt jeweils den Betrag des Abstandes eines Schnittpunktes zum Referenzpunkt. Die erste Folge repräsentiert dabei nur die Schnittpunkte auf der ersten Halbgeraden und die zweite Folge repräsentiert nur die Schnittpunkte auf der zweiten Halbgeraden. Die Folgen umfassen also zum Beispiel jeweils so viele Folgenelemente wie die Anzahl an Schnittpunkten auf den zugehörigen Halbgeraden. Alternativ können aber auch nur einige der Schnittpunkte annotiert werden, sodass die Folgen weniger Elemente als Schnittpunkte aufweisen.

Das Verfahren umfasst einen Schritt D), in dem eine dritte und eine vierte Folge von Sollwerten vorgegeben oder ermittelt werden, wobei die Sollwerte Sollabstände der Schnittpunkte auf der ersten Halbgeraden und auf der zweiten Halbgeraden zum Referenzpunkt repräsentieren.

Die dritte und vierte Folge sind also wiederum Zahlenfolgen, mit den Sollwerten als Folgenelemente. Die Sollwerte werden insbesondere so vorgegeben oder ermittelt, dass diese jeweils einen erwarteten Abstand eines Schnittpunktes zum Referenzpunkt repräsentieren oder angeben. Die dritte Folge repräsentiert dabei die Schnittpunkte auf der ersten Halbgeraden und umfasst daher so viele Folgenelemente wie die erste Folge. Die vierte Folge repräsentiert die Schnittpunkte auf der zweiten Halbgeraden und umfasst daher so viele Folgenelemente wie die zweite Folge. Insbesondere wird also jedem Messwert der ersten Folge ein Sollwert der dritten Folge eineindeutig zugeordnet und jedem Messwert der zweiten Folge ein Sollwert der vierten Folge eineindeutig zugeordnet.

Das Verfahren umfasst einen Schritt E), in dem eine Abbildungsvorschrift ermittelt wird, die die Sollwerte der dritten und vierten Folge zumindest näherungsweise auf die Messwerte der ersten und zweiten Folge abbildet oder umgekehrt. Bei der Abbildungsvorschrift handelt es sich insbesondere um eine Funktion $F : \mathbb{R} \to \mathbb{R}$. Jeder Sollwert der dritten und vierten Folge wird dabei näherungsweise auf den zugeordneten Messwert der ersten und zweiten Folge abgebildet. Alternativ kann aber auch eine Abbildungsvorschrift ermittelt werden, die die Messwerte der ersten und zweiten Folge zumindest näherungsweise auf die Sollwerte der dritten und vierten Folge abbildet.

"Zumindest näherungsweise" bedeutet hierbei, dass zur Ermittlung der Abbildungsvorschrift insbesondere ein Minimierungsverfahren, beispielsweise nach der Methode der kleinsten Quadrate, verwendet wird. Insbesondere ist die Anzahl an Parametern der Abbildungsvorschrift, die durch das Minimierungsverfahren ermittelt wird, kleiner als die Anzahl an Sollwerten oder Messwerten.

Das Verfahren umfasst einen Schritt F), bei dem Bilddaten eines über eine Optik aufgenommenen Bildes mittels der im Schritt E) ermittelten Abbildungsvorschrift korrigiert werden. Bei der Optik handelt es sich bevorzugt um die gleiche Optik, mit der das Kalibrierbild aufgenommen wurde, oder um eine ähnliche Optik. Bei den Bilddaten kann es sich um die Bilddaten des Kalibrierbildes oder eines anderen über eine Optik aufgenommenen Bildes handeln.

Bei der Korrektur wird aus dem aufgenommenen Bild also ein korrigiertes Bild erzeugt, bei dem bevorzugt die Abbildungsfehler der Optik teilweise oder vollständig korrigiert sind.

Die Korrektur des aufgenommenen Bildes erfolgt beispielsweise wie folgt: Das korrigierte Bild soll eine gewisse Anzahl an Pixeln aufweisen, zum Beispiel die gleiche Anzahl an Pixeln wie das aufgenommene Bild. Für jedes Pixel des korrigierten Bildes wird der Abstand dieses Pixels zum Referenzpunkt ermittelt. Anschließend wird ermittelt, welchen Wert die im Schritt E) ermittelte Abbildungsvorschrift diesem Abstand zuordnet. Daraufhin wird ein passendes Pixel des aufgenommenen Bildes ermittelt, das auf einer selben Geraden durch den Referenzpunkt liegt wie das Pixel des korrigierten Bildes und das als Abstand zum Referenzpunkt diesen ermittelten Wert hat. Die diesem Pixel in dem aufgenommenen Bild zugeordneten Bilddaten werden dann dem Pixel für das korrigierte Bild zugeordnet. Insbesondere wird das aufgenommene Bild also mit Hilfe der Abbildungsvorschrift radial entzerrt oder korrigiert, wobei der Referenzpunkt das Zentrum für die radiale Entzerrung darstellt.

Gemäß zumindest einer Ausführungsform werden die Schritte A) bis F) in der angegebenen Reihenfolge durchgeführt.

Das Korrekturverfahren umfasst die Schritte A), B), C), D), E), F). Im Schritt A) werden Bilddaten eingelesen, wobei die Bilddaten repräsentativ für ein über eine Optik aufgenommenes Kalibrierbild eines Kalibriermusters sind. Das Kalibriermuster umfasst eine Mehrzahl von Strukturen und das Kalibrierbild umfasst entsprechend abgebildete Strukturen. Im Schritt B) wird eine Gerade durch das Kalibrierbild simuliert, so dass die Gerade durch einen Referenzpunkt verläuft, der die Gerade in eine erste Halbgerade und eine zweite Halbgerade unterteilt und die erste Halbgerade und die zweite Halbgerade jeweils die abgebildeten Strukturen in einem oder mehreren Schnittpunkten schneiden. Im Schritt C) werden eine erste und eine zweite Folge von Messwerten ermittelt, die sich aus dem Kalibrierbild ergebende Abstände der Schnittpunkte auf der ersten Halbgeraden und auf der zweiten Halbgeraden zum Referenzpunkt repräsentieren. Im Schritt D) werden eine dritte und eine vierte Folge von Sollwerten vorgegeben oder ermittelt, wobei die Sollwerte Sollabstände der Schnittpunkte auf der ersten Halbgeraden und auf der zweiten Halbgeraden zum Referenzpunkt repräsentieren. Im Schritt E) wird eine Abbildungsvorschrift ermittelt, die die Sollwerte der dritten und vierten Folge zumindest näherungsweise auf die Messwerte der ersten und zweiten Folge abbildet oder umgekehrt. Im Schritt F) werden Bilddaten eines über eine Optik aufgenommenen Bildes mittels der im Schritt E) ermittelten Abbildungsvorschrift korrigiert.

Der vorliegenden Erfindung liegt insbesondere die Idee zu Grunde, Abstände von Schnittpunkten zu einem Referenzpunkt, die ohne eine Verzerrung der Optik bestimmte Werte einnehmen sollten, eben genau auf diese Werte abzubilden. Anders als in alternativen Verfahren, bei denen beispielsweise abgebildete gekrümmte Gitterlinien auf gerade Gitterlinien abgebildet werden, werden hier nur Abstände korrigiert, was den Rechenaufwand erheblich reduziert. Das Verfahren, insbesondere die Ermittlung der Abbildungsvorschrift, ist damit besonders schnell. Eine Parametrisierung des Minimierungsverfahrens ist nicht notwendig, wodurch das Verfahren sehr stabil ist und bei validen Eingangsdaten robust funktioniert. Die Entzerrung oder Korrektur ist nicht auf gewisse Abstandsbereiche vom Referenzpunkt oder Bildzentrum beschränkt, sondern ist gleichermaßen vom Referenzpunkt bis in die Bildecken präzise und stabil. Die Implementierung des Verfahrens, beispielsweise in einer Recheneinheit oder einem Prozessor, gestaltet sich einfach und übersichtlich. Eine automatisierte Erkennung der Schnittpunkt der simulierten Geraden mit abgebildeten Strukturen ist algorithmisch einfach, wodurch eine vollautomatische Implementierung robust ist. Die exakte Ausrichtung des Kalibriermusters senkrecht zur Optik ist nicht notwendig.

Gemäß zumindest einer Ausführungsform sind die Strukturen parallel verlaufende Linien, bevorzugt äquidistante Linien. Die Linien können gerade oder gekrümmt sein.

Gemäß zumindest einer Ausführungsform wird die Gerade so simuliert, dass sie zumindest eine der abgebildeten Linien unter einem Winkel von zumindest 80° schneidet. Je größer der Winkel zwischen der simulierten Geraden und den abgebildeten Linien ist, desto mehr Schnittpunkte liegen auf der ersten Halbgeraden und der zweiten Halbgeraden und desto präziser kann die Abbildungsvorschrift ermittelt werden.

Gemäß zumindest einer Ausführungsform sind die Strukturen untereinander äquidistant. Das heißt, benachbarte Strukturen weisen immer den gleichen Abstand zueinander auf.

Gemäß zumindest einer Ausführungsform wird im Schritt D) die dritte und vierte Folge so vorgegeben oder ermittelt, dass virtuelle Schnittpunkte auf der Geraden, die den Sollwerten entsprechende Abstände zum Referenzpunkt aufweisen, untereinander äquidistant sind. Das heißt, hätten die Schnittpunkte als Abstände zum Referenzpunkt die Sollwerte, so wären die Schnittpunkte untereinander äquidistant, sodass zwei benachbarte Schnittpunkte auf der Geraden immer den gleichen Abstand zueinander hätten.

Die virtuellen Schnittpunkte sind keine tatsächlichen Schnittpunkte, sondern nur fiktive Schnittpunkte.

Bei dieser Ausführungsform wird also die Abbildungsvorschrift so ermittelt, dass Abbildungen von ursprünglich äquidistanten Strukturen nach der Korrektur mit der Abbildungsvorschrift möglichst wieder äquidistant erscheinen.

Als Referenzpunkt wird der Schnittpunkt des Kalibrierbildes mit einer optischen Achse der Optik gewählt. Alternativ kann als Referenzpunkt auch die Bildmitte des Kalibrierbildes gewählt werden.

Gemäß zumindest einer Ausführungsform umfasst das Verfahren weiter einen Schritt D1), in dem eine erste Anzahl n1 an Schnittpunkten auf der ersten Halbgeraden ermittelt wird, die innerhalb eines vorgegebenen Maximalabstands vom Referenzpunkt liegen. Der Maximalabstand wird bevorzugt kleiner als ein maximaler Abstand eines Bildrandes des Kalibrierbildes zum Referenzpunkt gewählt.

Gemäß zumindest einer Ausführungsform umfasst das Verfahren weiter einen Schritt D2), in dem eine zweite Anzahl n2 an Schnittpunkten auf der zweiten Halbgeraden ermittelt wird, die innerhalb des vorgegebenen Maximalabstands vom Referenzpunkt liegen.

Im Schritt D) werden die dritte und vierte Folge derart vorgegeben oder ermittelt, dass Abstände zwischen benachbarten virtuellen Schnittpunkten auf der Geraden, die den Sollwerten entsprechende Abstände zum Referenzpunkt aufweisen, entlang der Geraden monoton und linear zu- oder abnehmen. Anders ausgedrückt: hätten die Schnittpunkte als Abstände zum Referenzpunkt die Sollwerte, so würden die Abstände zwischen den Schnittpunkten entlang der Geraden entweder monoton linear zunehmen oder monoton linear abnehmen.

Der Abstand zwischen einem zweiten virtuellen Schnittpunkt und einem dritten virtuellen Schnittpunkt ist also beispielsweise um einen Wert m größer als der Abstand zwischen einem ersten virtuellen Schnittpunkt und dem zweiten virtuellen Schnittpunkt. Der Abstand zwischen dem dritten virtuellen Schnittpunkt und einem vierten virtuellen Schnittpunkt wiederum ist um den Wert m größer als der Abstand zwischen dem zweiten virtuellen Schnittpunkt und dem dritten virtuellen Schnittpunkt, und so weiter. Die Steigung m ist beispielsweise eine reelle Zahl.

Die lineare Zu- oder Abnahme wird dabei derart gewählt, dass auf die erste Halbgerade genau n1 virtuelle Schnittpunkte mit Abständen zum Referenzpunkt von höchstens einem Sollmaximalabstand passen und auf die zweite Halbgerade genau n2 virtuelle Schnittpunkte mit Abständen zum Referenzpunkt von höchstens dem Sollmaximalabstand passen.

Das heißt, die Steigung m wird so vorgegeben, dass über eine Strecke auf der Geraden, deren Länge dem zweifachen Sollmaximalabstand entspricht, und die von dem Referenzpunkt halbiert wird, genau n1 + n2 virtuelle Schnittpunkte passen, zwischen denen der Abstand mit der Steigung m zu- oder abnimmt.

Mit dieser Vorgehensweise kann insbesondere eine Verkippung des Kalibriermusters bei der Aufnahme über die Optik berücksichtigt werden. Eine solche Verkippung würde in einem Bild ohne eine Verzerrung durch die Optik zum Beispiel zu abgebildeten Gitterlinien führen, deren Abstände in eine Richtung linear zu- oder abnimmt. Entsprechend werden die Sollwerte hier so gewählt, dass die Korrektur des Kalibrierbildes mittels der Abbildungsvorschrift im Wesentlichen zu Gitterlinien mit linear zunehmenden oder abnehmenden Abständen führt.

Zur Verbesserung der Genauigkeit könnte statt mit ganzzahligen Anzahlen an Schnittpunkten hier mit Dezimalbrüchen gearbeitet werden. Dabei werden sowohl das Verhältnis der dem Referenzpunkt nächstliegenden Schnittpunkte und der Abstand des dem Referenzpunkt fernsten Schnittpunktes zum Maximalabstand berücksichtigt, beispielsweise durch eine lineare Interpretation. Ebenso bietet sich zur Erhöhung der Genauigkeit an, den maximalen Abstand möglichst groß zu wählen. Beispielsweise wird als Maximalabstand der vom Referenzpunkt am weitesten entfernte Schnittpunkt derjenigen Halbgeraden gewählt, bei der dieser Schnittpunkt den geringeren Abstand zum Referenzpunkt aufweist.

Gemäß zumindest einer Ausführungsform werden im Schritt D) die jeweils kleinsten Sollwerte der dritten und vierten Folge so vorgegeben, dass die Summe dieser beiden kleinsten Sollwerte einem vorgegebenen Wert entspricht. Werden die Sollwerte in der dritten und vierten Folge beispielsweise so vorgegeben, dass Abstände zwischen entsprechenden virtuellen Schnittpunkten auf der Geraden immer gleich sind, so wird die Summe der beiden kleinsten Sollwerte zum Beispiel so vorgegeben, dass diese ebenfalls diesem Abstand entspricht.

Werden die Sollwerte dagegen beispielsweise so vorgegeben, dass die Abstände entsprechender virtueller Schnittpunkte entlang der Geraden monoton und linear zu- oder abnehmen, dann wird die Summe der beiden kleinsten Sollwerte so vorgegeben, dass diese lineare Zu- oder Abnahme eingehalten bleibt.

Gemäß zumindest einer Ausführungsform werden im Schritt D) die jeweils kleinsten Sollwerte der dritten und vierten Folge so vorgegeben, dass das Verhältnis des kleinsten Sollwertes der dritten Folge zum kleinsten Sollwert der vierten Folge gleich dem Verhältnis des kleinsten Messwertes der ersten Folge zum kleinsten Messwert der zweiten Folge ist.

Gemäß zumindest einer Ausführungsform werden im Schritt D) die jeweils kleinsten Sollwerte der dritten und vierten Folge über ein iteratives Verfahren ermittelt, wobei als Randbedingung vorgegeben wird, dass die Summe dieser beiden kleinsten Sollwerte einem vorgegebenen Wert entspricht. Beispielsweise ist der vorgegebene Wert wie oben beschrieben gewählt.

Anstelle für das Verhältnis der kleinsten Sollwerte der dritten und vierten Folge also von vornherein einen festen Wert vorzugeben, wird dieser Wert ermittelt, insbesondere durch ein iteratives Minimierungsverfahren. Die kleinsten Sollwerte werden zum Beispiel gleichzeitig oder zusammen mit der Abbildungsvorschrift über das Minimierungsverfahren bestimmt.

Gemäß zumindest einer Ausführungsform wird als Abbildungsvorschrift ein Polynom verwendet. Beispielsweise wird ein Polynom von höchstens sechstem Grad verwendet. Bevorzugt wird ein Polynom vierten Grades verwendet. Besonders bevorzugt wird das konstante Element des Polynoms auf den festen Wert Null gesetzt.

Als Abbildungsvorschrift kann auch eine nicht-polynomiale Funktion zur radialen Linsenentzerrung verwendet werden, welche ebenso linear in ihren Parametern ist. Für nicht-polynomiale Funktionen zur radialen Linsenentzerrung, welche in ihren Parametern nicht-linear sind, lässt sich das Verfahren einsetzen, in dem ein lineares Minimierungsverfahren durch ein nicht-lineares Minimierungsverfahren ersetzt wird. Dies führt typischerweise jedoch zu iterativen Lösungsmethoden.

Gemäß zumindest einer Ausführungsform weist das Kalibrierbild ein rechteckiges Format auf.

Gemäß zumindest einer Ausführungsform verlaufen die abgebildeten Strukturen in Form von abgebildeten Linien diagonal über das Kalibrierbild. Schneidet nun die simulierte Gerade die abgebildeten Linien unter einem Winkel von beispielsweise zumindest 80°, so verläuft auch die simulierte Gerade im Wesentlichen diagonal über das Kalibrierbild, wodurch die Anzahl der Schnittpunkte mit den abgebildeten Linien und dabei die Genauigkeit des Verfahrens steigt.

Gemäß zumindest einer Ausführungsform werden mehrere verschiedene Geraden durch das Kalibrierbild simuliert und zu jeder Geraden eine erste und eine zweite Folge an Messwerten und eine dritte und vierte Folge an Sollwerten ermittelt. Die dritten und vierten Folgen an Sollwerten können für mehrere oder alle Geraden entsprechend den vorherigen Ausführungsformen ermittelt werden.

Gemäß zumindest einer Ausführungsform werden die Folgen jeder Geraden zur Ermittlung der Abbildungsvorschrift herangezogen. Dadurch steigt die Anzahl an Punkte, anhand der die Abbildungsvorschrift ermittelt wird, was die Genauigkeit des Verfahrens erhöht.

Darüber hinaus wird eine Vorrichtung zur Korrektur von Bilddaten angegeben. Die Vorrichtung ist dazu eingerichtet, ein hier beschriebenes Korrekturverfahren durchzuführen. Das heißt, alle im Zusammenhang mit dem Korrekturverfahren offenbarten Merkmale sind auch für die Vorrichtung offenbart und umgekehrt.

Die Vorrichtung kann insbesondere einen Prozessor aufweisen, der die verschiedenen Verfahrensschritte durchführt. Die Vorrichtung kann beispielsweise eine Kamera, insbesondere eine Digitalkamera, sein. Beispielsweise umfasst die Vorrichtung die Optik, also zum Beispiel die Linse oder das Linsensystem, über die das Kalibrierbild aufgenommen wird.

Ein weiterer Aspekt betrifft ein Computerprogramm, wobei das Computerprogramm ausgebildet ist, das hier beschriebene Korrekturverfahren durchzuführen.

Ein weiterer Aspekt betrifft ein Computerprogrammprodukt, das einen ausführbaren Programmcode umfasst, wobei der Programmcode bei Ausführung durch eine Datenverarbeitungsvorrichtung das hier beschriebene Korrekturverfahren ausführt.

Nachfolgend wird ein hier beschriebenes Korrekturverfahren sowie eine hier beschriebene Vorrichtung unter Bezugnahme auf Zeichnungen anhand von Ausführungsbeispielen näher erläutert. Gleiche Bezugszeichen geben dabei gleiche Elemente in den einzelnen Figuren an. Es sind dabei jedoch keine maßstäblichen Bezüge dargestellt, vielmehr können einzelne Elemente zum besseren Verständnis übertrieben groß dargestellt sein.

Es zeigen:

Figuren 1 bis 7 verschiedene Positionen in Ausführungsbeispielen des Korrekturverfahrens,

Figuren 8A und 8B Ablaufdiagramme verschiedener Ausführungsbeispiele des Korrekturverfahrens,

Figur 9 ein Ausführungsbespiel der Vorrichtung.

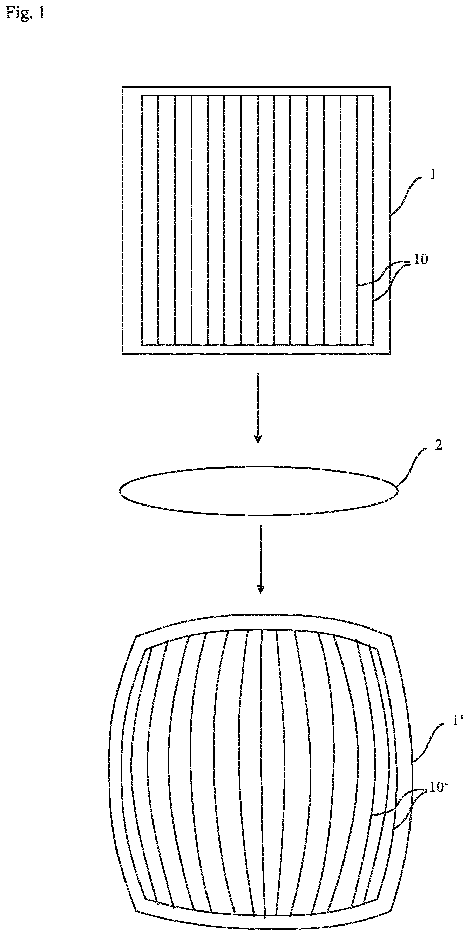

In der Figur 1 ist eine erste Position in einem Ausführungsbeispiel des Korrekturverfahrens gezeigt. Über eine Optik 2, vorliegend eine Linse 2, ist ein Kalibrierbild 1' eines Kalibriermusters 1 abgebildet. Das Kalibriermuster 1 umfasst eine Mehrzahl von Strukturen 10 in Form von Linien 10. Die Linien 10 verlaufen vorliegend parallel und äquidistant zueinander.

Das Kalibrierbild 1', also die Abbildung des Kalibriermusters 1 über die Optik 2, ist verzerrt. Abgebildete Linien 10' des Kalibrierbildes 1' sind durch die Verzerrung weder parallel noch äquidistant zueinander. Dies ist zum Beispiel auf Abbildungsfehler der Optik 2 zurückzuführen.

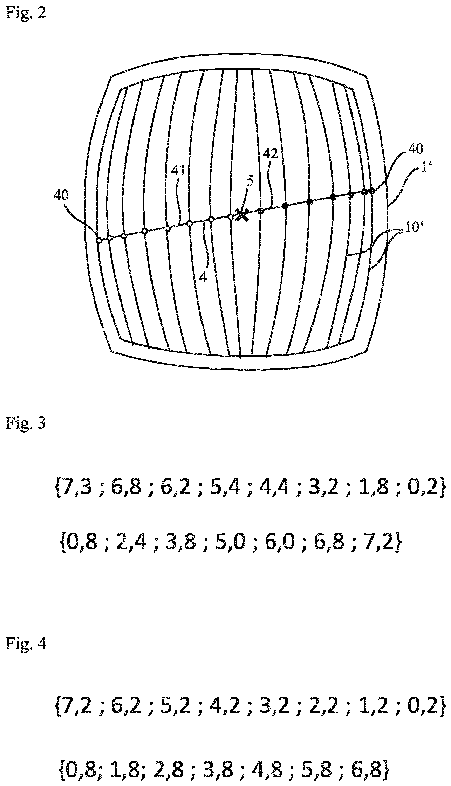

In der Figur 2 ist eine zweite Position des Korrekturverfahrens gezeigt. Durch das Kalibrierbild 1' ist eine Gerade 4 simuliert, die durch einen Referenzpunkt 5 verläuft, und die abgebildeten Linien 10' in mehreren Schnittpunkten 40 schneidet. Der Referenzpunkt 5 ist vorliegend das optische Bildzentrum oder die Bildmitte des Kalibrierbildes 1'. Der Referenzpunkt 5 unterteilt die Gerade 4 in eine erste Halbgerade 41 und eine zweite Halbgerade 42. Sowohl auf der ersten Halbgeraden 41 also auch auf der zweiten Halbgeraden 42 liegen mehrere Schnittpunkte 40.

In der Figur 3 ist eine dritte Position des Korrekturverfahrens gezeigt. Ausgehend von den Schnittpunkten wird eine erste Folge und eine zweite Folge an Messwerten bestimmt. Die Messwerte der ersten Folge repräsentieren oder sind die Abstände der Schnittpunkte auf der ersten Halbgeraden zum Referenzpunkt. Die Messwerte der zweiten Folge repräsentieren oder sind die Abstände der Schnittpunkte auf der zweiten Halbgeraden zum Referenzpunkt.

Die dargestellten acht Messwerte der ersten Folge und die dargestellten sieben Messwerte der zweiten Folge sind rein illustrativ gewählt und entsprechen nicht den tatsächlichen Abständen der in der Figur 2 gezeigten Schnittpunkte 40 zum Referenzpunkt.

In der Figur 4 ist eine vierte Position des Korrekturverfahrens gezeigt. Hier sind eine dritte und eine vierte Folge von Sollwerten vorgegeben. Die Sollwerte der dritten Folge repräsentieren Sollabstände der Schnittpunkte auf der ersten Halbgeraden zum Referenzpunkt. Die Sollwerte der vierten Folge repräsentieren Sollabstände der Schnittpunkte auf der zweiten Halbgeraden zum Referenzpunkt. Entsprechend weist die dritte Folge gleich viele Folgenelemente wie die erste Folge auf und die vierte Folge weist gleich viele Folgenelemente wie die zweite Folge auf.

Im vorliegenden Ausführungsbeispiel sind die Sollwerte der dritten und vierten Folge so vorgegeben, dass die Differenz zwischen jeweils zwei benachbarten Sollwerten immer gleich ist. Außerdem entspricht die Summe der kleinsten Sollwerte der dritten und vierten Folge genau dieser Differenz. Das heißt, virtuelle Schnittpunkte auf der Geraden, deren Abstände zum Referenzpunkt den Sollwerten entsprechen, sind untereinander alle äquidistant. Dies ist genau das, was man für die Schnittpunkte erwarten würde, wenn die Optik keine Abbildungsfehler aufweisen würde. Die Sollwerte entsprechen also bis auf einen Skalierungsfaktor den erwarteten Abständen der Schnittpunkte zum Referenzpunkt.

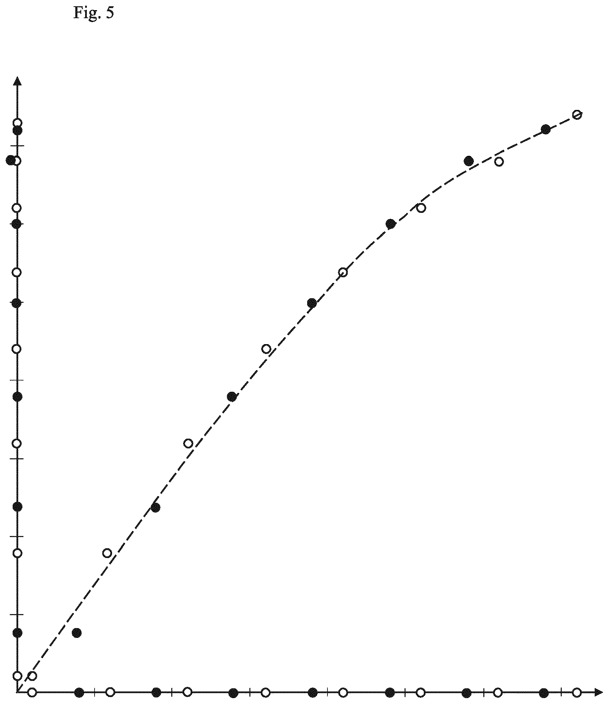

In der Figur 5 ist eine fünfte Position des Korrekturverfahrens gezeigt, bei dem die Sollwerte der dritten und vierten Folge auf einer horizontalen x-Achse und die Messwerte der ersten und zweiten Folge auf einer vertikalen y-Achse aufgetragen sind. Die der ersten Halbgeraden zugeordneten Messwerte und Sollwerte sind dabei als ungefüllte Punkte dargestellt, die der zweiten Halbgeraden zugeordneten Messwerte und Sollwerte sind als gefüllte Punkte dargestellt.

Die Messwerte und Sollwerte sind zudem als (x,y)-Werte in das durch die x-Achse und y-Achse aufgespannte Koordinatensystem eingetragen. Die (x, y)-Werte sind außerdem durch eine Funktion (gestrichelte Linie) angenähert. Die Funktion ist insbesondere durch ein Polynom vierten Grades parametrisiert. Die Parameter der Funktion werden zum Beispiel über ein Minimierungsverfahren, zum Beispiel das Verfahren der kleinsten Quadrate, ermittelt. Die Funktion stellt eine Abbildungsvorschrift dar, mit der die Sollwerte der dritten und vierten Folge zumindest näherungsweise auf die Messwerte der ersten und zweiten Folge abgebildet werden.

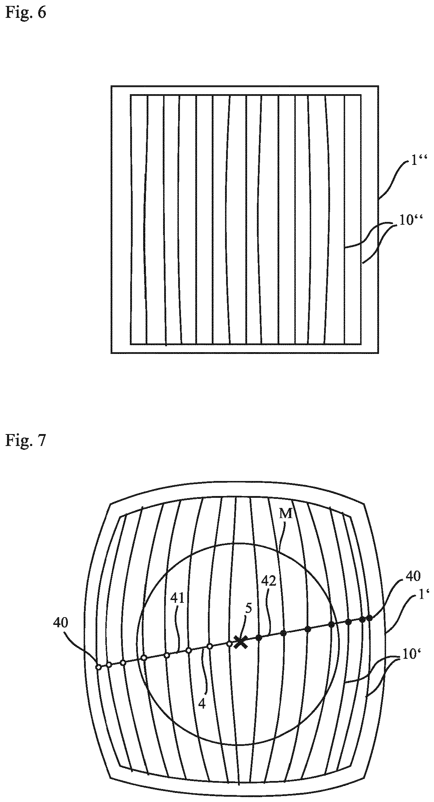

In der Figur 6 ist eine sechste Position des Korrekturverfahrens dargestellt. Mittels der zuvor ermittelten Abbildungsvorschrift wurden die Bilddaten des Kalibrierbildes radial korrigiert. Das dargestellte korrigierte Bild 1" weist korrigierte Linien 10" auf, die näherungsweise parallel und äquidistant zueinander verlaufen.

In der Figur 7 ist eine Position des Korrekturverfahrens gezeigt, bei der eine Anzahl n1 = 5 an Schnittpunkten 40 auf der ersten Halbgeraden 41 mit einem Abstand von höchstens einem Maximalabstand M vom Referenzpunkt 5 liegt. Auf der zweiten Halbgeraden 42 liegen n2 = 4 Schnittpunkte 40 mit einem Abstand von höchstens dem Maximalabstand M vom Referenzpunkt 5 entfernt.

Geht man davon aus, dass bei der Aufnahme des Kalibrierbildes 1' das Kalibriermuster 1 gekippt war, so müssten ohne eine Verzerrung durch die Optik die Abstände der abgebildeten Linien 10' gemäß dem Strahlensatz mit linear ansteigenden oder absteigenden Abständen erscheinen. Entsprechend sollte die Abbildungsvorschrift so ermittelt werden, dass nach der Korrektur der das Kalibrierbild 1' repräsentierenden Bilddaten Abstände zwischen den korrigierten Linien linear ab- oder zunehmen.

Um dies zu erreichen, werden nachfolgend zu der Position der Figur 7 die Sollwerte der dritten und vierten Folge zum Beispiel so vorgegeben, dass Abstände zwischen virtuellen Schnittpunkten auf der Geraden, die den Sollwerten entsprechende Abstände zum Referenzpunkt aufweisen, entlang der Geraden monoton und linear zu- oder abnehmen. Um die richtige Steigung in dieser linearen Zu- oder Abnahme zu erhalten, wird als Randbedingung zum Beispiel vorgegeben, dass auf die erste Halbgerade 41 genau n1 dieser virtuellen Schnittpunkte innerhalb eines Sollmaximalabstands vom Referenzpunkt 5 passen und auf die zweite Halbgerade 42 genau n2 virtuelle Schnittpunkte innerhalb desselben Sollmaximalabstands passen. Anschließend werden die entsprechenden Sollwerte und die Messwerte beispielsweise wie in der Figur 5 aufgetragen und eine Abbildungsvorschrift ermittelt.

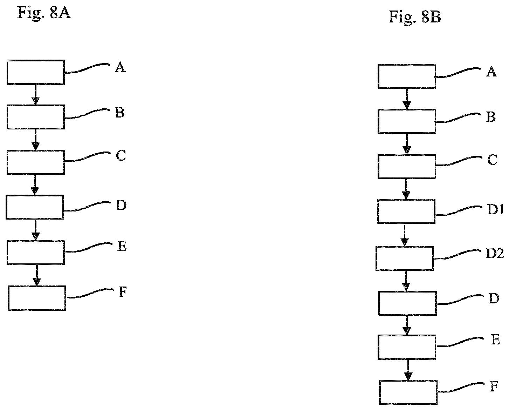

In der Figur 8A ist ein Ablaufdiagramm eines Ausführungsbeispiels des Korrekturverfahrens dargestellt. Es werden nacheinander die oben beschriebenen Schritte A) bis F) ausgeführt.

In der Figur 8B ist ein Ablaufdiagramm eines weiteren Ausführungsbeispiels gezeigt. Vor dem Schritt D) werden die oben beschriebenen Schritte D1) und D2) ausgeführt.

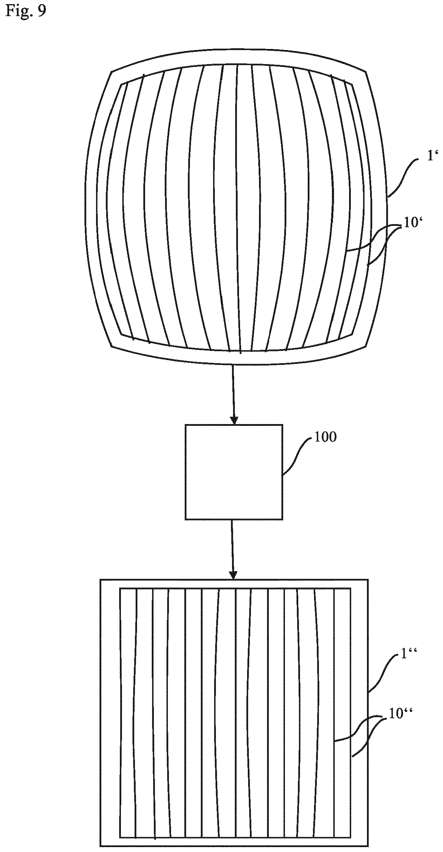

In der Figur 9 ist ein Ausführungsbeispiel einer Vorrichtung 100 gezeigt, die dazu eingerichtet ist, das Korrekturverfahren durchzuführen. Die Vorrichtung 100 umfasst zum Beispiel einen Prozessor. Bilddaten, die hier repräsentativ für ein über eine Optik aufgenommenes Kalibrierbild 1' eines Kalibriermusters sind, werden eingelesen. Die Vorrichtung führt das oben beschriebene Korrekturverfahren aus. Anschließend werden korrigierte Bilddaten ausgegeben. Vorliegend werden die korrigierten Bilddaten zu den eingelesenen Bilddaten des Kalibiermusters ausgegeben.

Anders als in der Figur 9 dargestellt, kann die Vorrichtung auch selbst die Optik umfassen, über die das Kalibrierbild aufgenommen wird. Die Vorrichtung ist dann zum Beispiel eine Digitalkamera.

**Patentansprüche**

1. Korrekturverfahren, umfassend die Schritte:

   A) Einlesen von Bilddaten, wobei

   - die Bilddaten repräsentativ für ein über eine Optik (2) aufgenommenes Kalibrierbild (1') eines Kalibriermusters (1) sind,
   - das Kalibriermuster (1) eine Mehrzahl von Strukturen (10) und das Kalibrierbild (1') entsprechend abgebildete Strukturen (10') umfasst;

   B) Simulation einer Geraden (4) durch das Kalibrierbild (1'), sodass

   - die Gerade (4) durch einen Referenzpunkt (5) verläuft, der die Gerade (4) in eine erste Halbgerade (41) und eine zweite Halbgerade (42) unterteilt und wobei als Referenzpunkt (5) der Schnittpunkt des Kalibrierbildes (1') mit einer optischen Achse der Optik (2) oder eine Bildmitte des Kalibrierbildes (1') gewählt wird, und
   - die erste Halbgerade (41) und die zweite Halbgerade (42) jeweils die abgebildeten Strukturen (10') in einem oder mehreren Schnittpunkten (40) schneiden;

   C) Ermitteln einer ersten und einer zweiten Folge von Messwerten, die sich aus dem Kalibrierbild (1') ergebende Abstände der Schnittpunkte (40) auf der ersten Halbgeraden (41) und auf der zweiten Halbgeraden (42) zum Referenzpunkt (5) repräsentieren;
   D) Vorgeben oder Ermitteln einer dritten und vierten Folge von Sollwerten, die Sollabstände der Schnittpunkte (40) auf der ersten Halbgeraden (41) und auf der zweiten Halbgeraden (42) zum Referenzpunkt (5) repräsentieren, **dadurch gekennzeichnet, dass** die dritte und vierte Folge derart vorgegeben oder ermittelt werden, dass

   - Abstände zwischen benachbarten virtuellen Schnittpunkten auf der Geraden (4), die den Sollwerten entsprechende Abstände zum Referenzpunkt (5) aufweisen, entlang der Geraden (4) monoton und linear zu- oder abnehmen, wobei die lineare Zu- oder Abnahme dabei derart gewählt wird, dass auf die erste Halbgerade (41) genau n1 virtuelle Schnittpunkte mit Abständen zum Referenzpunkt (5) von höchstens einem Sollmaximalabstand passen und auf die zweite Halbgerade (42) genau n2 virtuelle Schnittpunkte mit Abständen zum Referenzpunkt (5) von höchstens dem Sollmaximalabstand passen, so dass über eine Strecke auf der Geraden (4), deren Länge dem zweifachen Sollmaximalabstand entspricht und die von dem Referenzpunkt (5) halbiert wird, genau n1 + n2 virtuelle Schnittpunkte passen, zwischen denen der Abstand mit einer Steigung m zu- oder abnimmt;

   E) Ermitteln einer Abbildungsvorschrift, die die Sollwerte der dritten und vierten Folge zumindest näherungsweise auf die Messwerte der ersten und zweiten Folge abbildet oder umgekehrt;
   F) Korrektur von Bilddaten eines über eine Optik aufgenommenen Bildes mittels der im Schritt E) ermittelten Abbildungsvorschrift.

2. Korrekturverfahren nach Anspruch 1, wobei

   - die Strukturen (10) parallel verlaufende Linien (10) sind.

**3.** Korrekturverfahren nach Anspruch 2, wobei

- die Gerade (4) so simuliert wird, dass sie zumindest eine der abgebildeten Linien (10') unter einem Winkel von zumindest 80° schneidet, wobei je größer der Winkel zwischen der simulierten Geraden (4) und den abgebildeten Linien (10') ist, desto mehr Schnittpunkte (40) auf der ersten Halbgeraden (41) und der zweiten Halbgeraden (42) liegen.

**4.** Korrekturverfahren nach einem der vorhergehenden Ansprüche, wobei

- die Strukturen (10) untereinander äquidistant sind.

**5.** Korrekturverfahren nach einem der vorhergehenden Ansprüche, wobei

- im Schritt D) die dritte und vierte Folge so vorgegeben oder ermittelt werden, dass virtuelle Schnittpunkte auf der Geraden (4), die den Sollwerten entsprechende Abstände zum Referenzpunkt (5) aufweisen, untereinander äquidistant sind.

**6.** Korrekturverfahren nach einem der vorhergehenden Ansprüche, wobei das Verfahren weiter die Schritte umfasst:

D1) Ermitteln einer ersten Anzahl n1 an Schnittpunkten (40) auf der ersten Halbgeraden (41), die innerhalb eines vorgegebenen Maximalabstands (M) vom Referenzpunkt (5) liegen;
D2) Ermitteln einer zweiten Anzahl n2 an Schnittpunkten (40) auf der zweiten Halbgeraden (42), die innerhalb des vorgegebenen Maximalabstands (M) vom Referenzpunkt (5) liegen.

**7.** Korrekturverfahren nach einem der vorhergehenden Ansprüche,
wobei im Schritt D) die jeweils kleinsten Sollwerte der dritten und vierten Folge so vorgegeben werden, dass

- die Summe dieser beiden kleinsten Sollwerte einem vorgegebenen Wert entspricht, und
- das Verhältnis des kleinsten Sollwertes der dritten Folge zum kleinsten Sollwert der vierten Folge gleich dem Verhältnis des kleinsten Messwertes der ersten Folge zum kleinsten Messwert der zweiten Folge ist.

**8.** Korrekturverfahren nach einem der Ansprüche 1 bis 6, wobei im Schritt D) die jeweils kleinsten Sollwerte der dritten und vierten Folge über ein iteratives Verfahren ermittelt werden, wobei als Randbedingung vorgegeben wird, dass die Summe dieser beiden kleinsten Sollwerte einem vorgegebenen Wert entspricht.

**9.** Korrekturverfahren nach einem der vorhergehenden Ansprüche,
wobei als Abbildungsvorschrift ein Polynom verwendet wird.

**10.** Korrekturverfahren nach einem der vorhergehenden Ansprüche, wobei

- mehrere verschiedene Geraden (4) durch das Kalibrierbild (1') simuliert werden und zu jeder Geraden (4) eine erste und eine zweite Folge an Messwerten und eine dritte und vierte Folge an Sollwerten ermittelt wird,
- die Folgen jeder Geraden (4) zur Ermittlung der Abbildungsvorschrift herangezogen werden.

**11.** Vorrichtung (100) zur Korrektur von Bilddaten, die dazu eingerichtet ist, ein Korrekturverfahren nach einem der vorhergehenden Ansprüche durchzuführen.

**Claims**

**1.** Correction method, comprising the following steps:

A) reading in image data, wherein

- the image data are representative of a calibration image (1') of a calibration pattern (1) recorded by means of an optical unit (2),
- the calibration pattern (1) comprises a plurality of structures (10) and the calibration image (1') comprises correspondingly imaged structures (10');

B) simulating a straight line (4) through the calibration image (1'), such that

- the straight line (4) extends through a reference point (5), which subdivides the straight line (4) into a first straight half-line (41) and a second straight half-line (42) and wherein the intersection point of the calibration image (1') with an optical axis of the optical unit (2) or an image centre of the calibration image (1') is chosen as the reference point (5), and
- the first straight half-line (41) and the second straight half-line (42) each intersect the imaged structures (10') at one or more intersection points (40);

C) determining a first and a second sequence of measured values representing distances - resulting from the calibration image (1') - of the intersection points (40) on the first straight half-line (41) and on the second straight half-line (42) with respect to the reference point (5);

D) predetermining or determining a third and a fourth sequence of target values representing target distances of the intersection points (40) on the first straight half-line (41) and on the second straight half-line (42) with respect to the reference point (5),

**characterized in that**

the third and fourth sequences are predetermined or determined in such a way that

- distances between adjacent virtual intersection points on the straight line (4) which have distances with respect to the reference point (5) that correspond to the target values increase or decrease monotonically and linearly along the straight line (4), wherein the linear increase or decrease is chosen in this case such that exactly $n1$ virtual intersection points having distances with respect to the reference point (5) of at most a target maximum distance fit on the first straight half-line (41) and exactly $n2$ virtual intersection points having distances with respect to the reference point (5) of at most the target maximum distance fit on the second straight half-line (42) such that over a segment on the straight line (4), the length of which corresponds to twice the target maximum distance, and which is halved by the reference point (5), exactly $n1 + n2$ virtual intersection points fit, between which the distance increases or decreases with a gradient $m$;

E) determining a mapping rule that at least approximately maps the target values of the third and fourth sequences to the measured values of the first and second sequences, or vice versa;

F) correcting image data of an image recorded by means of an optical unit by way of the mapping rule determined in step E).

2. Correction method according to Claim 1, wherein

- the structures (10) are lines (10) extending parallel.

3. Correction method according to Claim 2, wherein

- the straight line (4) is simulated such that it intersects at least one of the imaged lines (10') at an angle of at least 80°, wherein the greater the angle between the simulated straight line (4) and the imaged lines (10'), the more intersection points (40) there are on the first straight half-line (41) and the second straight half-line (42).

4. Correction method according to any one of the preceding claims, wherein

- the structures (10) are mutually equidistant.

5. Correction method according to any one of the preceding claims, wherein

- in step D) the third and fourth sequences are predetermined or determined such that virtual intersection points on the straight line (4) which have distances with respect to the reference point (5) that correspond to the target values are mutually equidistant.

6. Correction method according to any one of the preceding claims, wherein the method furthermore comprises the following steps:

D1) determining a first number $n1$ of intersection points (40) on the first straight half-line (41) which are within a predetermined maximum distance (M) from the reference point (5);

D2) determining a second number $n2$ of intersection points (40) on the second straight half-line (42) which are within the predetermined maximum distance (M) from the reference point (5).

7. Correction method according to any one of the preceding claims, wherein in step D) the respective smallest target values of the third and fourth sequences are predetermined such that

- the sum of these two smallest target values corresponds to a predetermined value, and
- the ratio of the smallest target value of the third sequence to the smallest target value of the fourth sequence is equal to the ratio of the smallest measured value of the first sequence to the smallest measured value of the second sequence.

8. Correction method according to any one of Claims 1 to 6, wherein in step D) the respective smallest target values of the third and fourth sequences are determined by means of an iterative method, wherein the condition that the sum of these two smallest target values corresponds to a predetermined value is predetermined as a boundary condition.

9. Correction method according to any one of the preceding claims,
wherein a polynomial is used as the mapping rule.

10. Correction method according to any one of the preceding claims, wherein

- a plurality of different straight lines (4) through the calibration image (1') are simulated and a first and a second sequence of measured values and a third and a fourth sequence of target values are determined with respect to each straight line (4),
- the sequences of each straight line (4) are used for determining the mapping rule.

11. Device (100) for correcting image data, which is configured to carry out a correction method according to any one of the preceding claims.

**Revendications**

1. Procédé de correction, comprenant les étapes suivantes :

A) lecture de données d'image,

- les données d'image étant représentatives d'une image d'étalonnage (1') d'un modèle d'étalonnage (1) enregistrée par le biais d'une optique (2),
- le modèle d'étalonnage (1) comportant une pluralité de structures (10) et l'image d'étalonnage (1') des structures (10') représentées en conséquence ;

B) simulation d'une droite (4) par l'image d'étalonnage (1'), de sorte que

- la droite (4) suit un tracé par un point de référence (5), lequel divise la droite (4) en une première demi-droite (41) et une deuxième demi-droite (42) et le point de référence (5) sélectionné étant le point d'intersection de l'image d'étalonnage (1') avec un axe de l'optique (2) ou un centre d'image de l'image d'étalonnage (1'), et
- la première demi-droite (41) et la deuxième demi-droite (42) croisent respectivement les structures (10') représentées en un ou plusieurs points d'intersection (40) ;

C) détermination d'une première et d'une deuxième séquence de valeurs mesurées, lesquelles représentent les écarts résultant de l'image d'étalonnage (1') entre les points d'intersection (40) sur la première demi-droite (41) et la deuxième demi-droite (42) par rapport au point de référence (5) ;
D) prédéfinition ou détermination d'une troisième et d'une quatrième séquence de valeurs de consigne, lesquelles représentent les écarts voulus entre les points d'intersection (40) sur la première demi-droite (41) et la deuxième demi-droite (42) par rapport au point de référence (5), **caractérisé en ce que** la troisième et la quatrième séquence de valeurs de consigne sont prédéfinies ou déterminées de telle sorte que

- les écarts entre des points d'intersection virtuels voisins sur la droite (4), lesquels présentent des écarts par rapport au point de référence (5) correspondant aux valeurs de consigne, augmentent un diminuent de manière monotone et linéaire le long de la droite (4), l'augmentation ou la diminution linéaire étant ici choisie de telle sorte que sur la première demi-droite (41) tiennent exactement n1 points d'intersection virtuels avec des écarts par rapport au point de référence (5) égaux au maximum à un écart maximal de consigne et sur la deuxième demi-droite (42) tiennent exactement n2 points d'intersection virtuels avec des écarts par rapport au point de référence (5) égaux au maximum à l'écart maximal de consigne, de sorte que sur un segment sur la droite (4), dont la longueur correspond au double de l'écart maximal de consigne et qui est divisée par deux par le point de référence (5), tiennent exactement n1 + n2 points d'intersection virtuels entre lesquels l'écart augmente ou diminue avec une pente m ;

E) détermination d'une prescription de représentation, laquelle représente au moins approximativement les valeurs de consigne de la troisième et de la quatrième séquence sur les valeurs mesurées de la première et de la deuxième séquence, ou inversement ;
F) correction de données d'image d'une image enregistrée par le biais d'une optique au moyen de la prescription de représentation déterminée à l'étape E).

2. Procédé de correction selon la revendication 1,

- les structures (10) étant des lignes (10) qui suivent un tracé parallèle.

3. Procédé de correction selon la revendication 2,

- la droite (4) étant simulée de telle sorte qu'elle croise au moins l'une des lignes (10') représentées sous un angle d'au moins 80°, plus l'angle entre la droite (4) simulée et les lignes (10') représentées est grand, plus grand est le nombre de points d'intersection (40) qui se trouvent sur la première demi-droite (41) et la deuxième demi-droite (42).

4. Procédé de correction selon l'une des revendications précédentes,

   - les structures (10) sont équidistantes entre elles.

5. Procédé de correction selon l'une des revendications précédentes,

   - à l'étape D), la troisième et la quatrième séquence sont prédéfinies ou déterminées de telle sorte que les points d'intersection virtuels sur la droite (4), lesquels présentent des écarts par rapport au point de référence (5) correspondant aux valeurs de consigne, sont équidistants entre eux.

6. Procédé de correction selon l'une des revendications précédentes, le procédé comprenant en outre l'étape suivante :

   D1) détermination d'un premier nombre n1 de points d'intersection (40) sur la première demi-droite (41), lesquels se trouvent au sein d'un écart maximal (M) prédéfini par rapport au point de référence (5) ;
   D2) détermination d'un deuxième nombre n2 de points d'intersection (40) sur la deuxième demi-droite (42), lesquels se trouvent au sein de l'écart maximal (M) prédéfini par rapport au point de référence (5).

7. Procédé de correction selon l'une des revendications précédentes,
   à l'étape D), les valeurs de consigne respectivement les plus petites de la troisième et de la quatrième séquence étant prédéfinies de telle sorte que

   - la somme de ces deux valeurs de consigne les plus petites correspond à une valeur prédéfinie, et
   - le rapport entre la valeur de consigne la plus petite de la troisième séquence et la valeur de consigne la plus petite de la quatrième séquence est égal au rapport entre la valeur mesurée la plus petite de la première séquence et la valeur mesurée la plus petite de la deuxième séquence.

8. Procédé de correction selon l'une des revendications 1 à 6,

à l'étape D), les valeurs de consigne respectivement les plus petites de la troisième et de la quatrième séquence étant déterminées par le biais d'un procédé itératif, la condition limite prédéfinie étant que la somme de ces deux valeurs de consigne les plus petites correspond à une valeur prédéfinie.

9. Procédé de correction selon l'une des revendications précédentes,
   la prescription de représentation utilisée étant un polynôme.

10. Procédé de correction selon l'une des revendications précédentes,

   - plusieurs droites (4) différentes étant simulées par l'image d'étalonnage (1') et une première et une deuxième séquence de valeurs mesurées ainsi qu'une troisième et une quatrième séquence de valeurs de consigne étant déterminées pour chaque droite (4),
   - les séquences de chaque droite (4) étant utilisées pour la détermination de la prescription de représentation.

11. Dispositif (100) de correction de données d'image, lequel est conçu pour mettre en oeuvre un procédé de correction selon l'une des revendications précédentes.

Fig. 1

Fig. 2

Fig. 3

$\{7,3 ; 6,8 ; 6,2 ; 5,4 ; 4,4 ; 3,2 ; 1,8 ; 0,2\}$

$\{0,8 ; 2,4 ; 3,8 ; 5,0 ; 6,0 ; 6,8 ; 7,2\}$

Fig. 4

$\{7,2 ; 6,2 ; 5,2 ; 4,2 ; 3,2 ; 2,2 ; 1,2 ; 0,2\}$

$\{0,8; 1,8; 2,8 ; 3,8 ; 4,8 ; 5,8 ; 6,8\}$

Fig. 5

Fig. 6

Fig. 7

Fig. 8A

Fig. 8B

**Fig. 9**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- **WANG QUANZENG et al.** Development of the local magnification method for quantitative evaluation of endoscope geometric distortion. *JOURNAL OF BIO-MEDICAL OPTICS, SPIE,* 01. Mai 2016, vol. 21 (5), 56003

- Estimating the radial distortion of an optical system; effect on a localization process. **REMY S et al.** PROCEEDINGS OF THE INTERNATIONAL CONFERENCE ON IMAGE PROCESSING (ICIP) AUSTIN. SOC. PRESS, 13. November 1994, vol. 2, 997-1001